# EUROPEAN PATENT SPECIFICATION

(11) **EP 0 481 473 B1**
(45) Date of publication and mention of the grant of the patent: **17.12.1997**
(21) Application number: 91117691.5
(22) Date of filing: 16.10.1991
(51) Int. Cl.: F16J 1/00, F04B 53/14, B21D 51/00, E05F 3/00, E05F 3/10

(54) **Piston, method of making the piston and piston and cylinder unit comprising the piston, and a door closer and method of making same**
Kolben, Herstellungsverfahren für den Kolben und eine diesen Kolben umfassende Kolben-Zylindereinheit und ein Türschliesser und dessen Herstellungsverfahren
Piston, procédé de fabrication du piston et ensemble de piston et cylindre comprenant le piston, et un ferme-porte et son procédé de fabrication

(30) Priority: 17.10.1990 GB 9022467; 17.10.1990 GB 9022468; 17.10.1990 GB 9022466
(43) Date of publication of application: 22.04.1992
(73) Proprietor: JEBRON LIMITED, West Midlands WS10 9HY (GB)
(72) Inventor: Brown, Peter Edward, Bridgnorth Shropshire (GB); Perrins, Brian Wilfred, Stourbridge West Midlands DY7 6JT (GB)
(74) Representative: Symes, Christopher A.

(56) References cited:
- DE-C- 462 255
- GB-A- 478 445
- GB-A- 997 662

## Description

### Description of the invention

From one aspect, the present invention relates to a method of making a piston wherein a pressing operation is performed on substantially flat metal stock to form a recess in the stock at one face thereof, a cup is formed by drawing or pressing a portion of the stock which includes the recess, the recess being incorporated in a side wall of the cup at the inside of the cup, there is formed a ring to seal the piston with respect to a cylinder, the ring being resiliently deformable, relative to the cup, and having, when unstressed, a first end portion with an outside diameter exceeding the outside diameter of the cup and a second end portion having an outward projection and wherein the second end portion of the ring is inserted into the cup to seat the projection in the recess of the cup and leave the first end portion of the ring protruding from the cup.

The cup may have an imperforate bottom. Alternatively, there may be at least one opening at the bottom of the cup to permit flow of fluid through the piston. Furthermore, the cup may be attached to a stem of the piston.

The drawing or pressing operation preferably completes formation of the cup from the stock. Forming of the recess by a pressing operation performed on the flat stock enables machining operations on the cup to be avoided.

The ring is preferably a snap-fit in the cup.

After the ring has been inserted into the cup, the piston is preferably confined within a cylindrical wall which constrains the first end portion of the ring to a circular shape and thereby prevents the deformation of the ring which would enable the projection to escape from the recess of the cup. It will be understood that, if the first end portion of the ring is not confined and is therefore free to adopt an approximately elliptical shape, the ring may be deformed sufficiently to withdraw the projection from the recess.

According to a second aspect of the invention, there is provided a piston comprising a metal cup and a ring to seal the piston with respect to a cylinder, wherein the ring is resiliently deformable relative to the cup, wherein a first portion of the ring protrudes from the cup, a second portion of the ring lies inside the cup and a projection on the second portion lies in a recess in a side wall of the cup to retain the second portion in the cup, wherein the cup is formed by a pressing or drawing operation from a flat blank and the recess is pressed into the blank before the blank is formed into the cup.

The piston is preferably confined within a cylinder in which the piston is contained, the cylinder confining the ring to prevent such deformation of the ring as would permit the projection to leave the recess.

According to a third aspect of the invention, there is provided a door closer comprising a piston and cylinder, the piston being in accordance with the second aspect of the invention.

Preferably, the piston is arranged inside a tubular body, for reciprocation relative to the body along a path defined by the body, a shaft arranged for turning relative to the body about an axis transverse to said path and drive means for transmitting movement between the piston and the shaft, wherein the body is formed at diametrically opposite positions with a pair of integral, outwardly projecting bosses which are co-axial with and support the shaft. Preferably, the shaft is supported in each boss via a bearing which lies in the boss.

The body may be formed from a length of tube by piercing a respective hole in the body corresponding to each boss and then bending the material of the body in a region surrounding the hole to form the boss. In this way, the bosses for supporting the shaft can be provided without any machining of the body being necessary, other than cutting the required length of tube from tubular stock.

The door closer preferably also comprises a housing for the body, the housing and the body having respective locating formations which cooperate with each other to locate the body in a predetermined position relative to the housing. In this case, the housing may have formations which can be used in securing of the housing to a door or other structure with which the door closer is to be used and the housing will then locate the body with respect to that structure.

According to a fourth aspect of the invention, there is provided a method of making a door closer comprising a piston and cylinder, the piston being made in accordance with the first aspect of the invention.

Preferably, the method further comprises the steps of mounting a shaft in a tube with an axis of the shaft transverse to an axis of the tube, the method comprising the steps of piercing respective holes at diametrically opposite positions in the tube, forcing material of the tube surrounding each hole away from the axis of the tube to form a respective outwardly projecting boss and mounting the shaft in the bosses.

A method in accordance with the fourth aspect of the invention may be used in the manufacture of a door closer according to the third aspect of the invention.

An example of a piston embodying the second aspect of the invention and which is produced by a method according to the first aspect of the invention will now be described, with reference to the accompanying drawings, wherein:-
**FIGURE 1** shows a perspective view of the piston with a ring separated from a cup of the piston,
**FIGURE 2** shows a cross-section of certain parts of an assembly incorporating the piston of Figure 1 and a cylinder containing the piston, the section being in a plane which contains a diameter of the cylinder,
**FIGURE 3** shows on a smaller scale, a blank from which a cup of the piston is formed,
**FIGURE 4** shows a perspective view of the door closer with a cover separated from other components of the door closer,
**FIGURE 5** is a diagrammatic illustration of a stage in production of a body of the door closer,
**FIGURE 6** illustrates a stage in production of a housing of a door closer,
**FIGURE 7** is a diagrammatic illustration of an alternative way of producing the body of the door closer and
**FIGURE 8** shows diagrammatically a cross section on the line VIII-VIII of Figure 4.

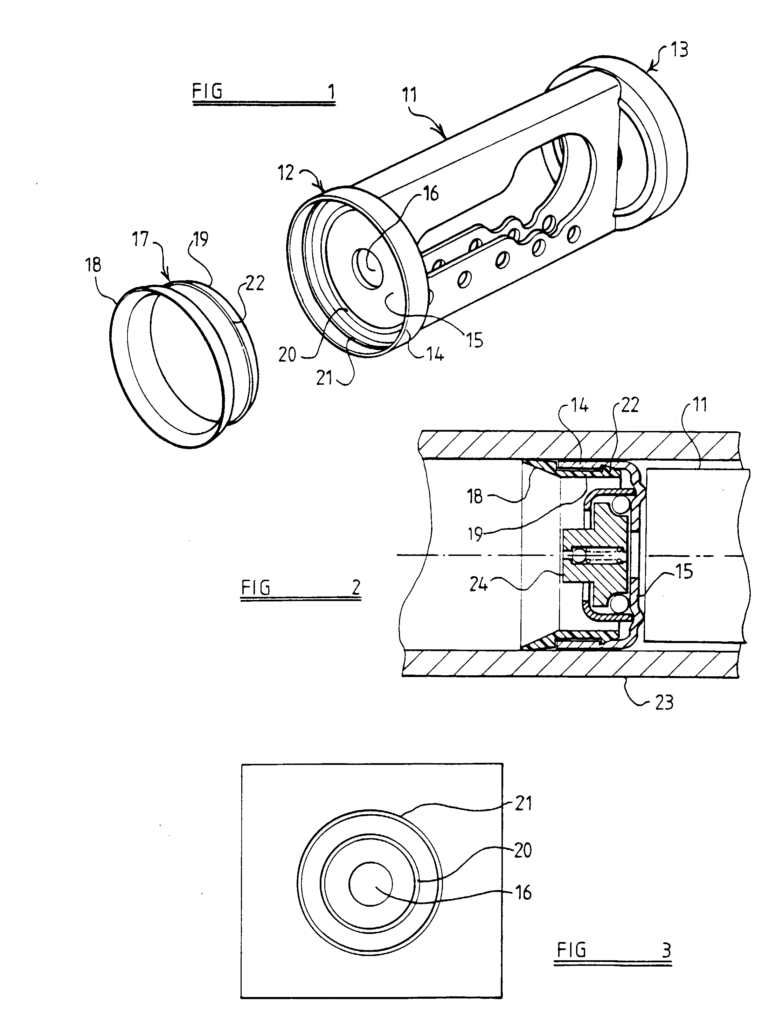

The example illustrated incorporates the piston of Figures 1 and 2.

The particular piston represented in Figure 1 is a piston of a door closer. The piston may, for example, be used in a door closer generally as described and illustrated in GB2230050 The piston comprises an elongated stem 11 and respective cups 12 and 13 attached to the stem at opposite ends thereof. The cups 12 and 13 may be identical with each other and only the cup 12 will be described in detail.

The cup 12 of the piston includes a substantially cylindrical side wall 14 and a bottom wall 15 in which there is formed an aperture 16 to permit flow of damping fluid through the piston. There is associated with the cup 12 a valve 24 for controlling flow of fluid through the aperture 16 as in known door closers. The bottom wall 15 may include an annular rib.

The piston further comprises a circular ring 17 which is resiliently deformable relative to the cup 12. The cups 12 and 13 and the stem 11 are typically formed of metal, preferably steel. The ring 17 may be formed of a plastics material, for example a thermo-plastic. A first end portion 18 of the ring lies outside the cup 12 and, in the unstressed condition, has an outside diameter which is slightly greater than the outside diameter of the cup. A second end portion 19 of the ring lies inside the cup and engages the side wall 14.

The cup and the ring have a complimentary recess and projection for retaining the ring in the cup. In the example illustrated, the recess is formed in the side wall 14 at the inside of the cup and the projection is formed on the second end portion 19 of the ring. Also in the example illustrated, both the recess and the projection are annular.

The ring 17 is conveniently formed by moulding a suitable plastics material to the required finished size and shape.

The cup 12 is formed from substantially flat strip metal stock. A pressing operation is performed on a length of the stock to produce the blank illustrated in Figure 3. During this pressing operation, material is cut away from the centre of the blank to form the aperture 16, an annular depression 20 is formed in the blank at a face which will be the internal face of the bottom wall 15 and an annular recess 21 is formed in that part of the blank which will become the side wall 14 of the cup. The recess 21 is spaced further from the aperture 16 than is the depression 20 and is at the same face of the blank as is the depression 20.

The blank illustrated in Figure 3 is subjected to a further operation in which scrap is severed from the periphery of the blank and the blank is drawn or pressed to form the cup 12. This operation completes formation of the cup. It will be noted that the cup is produced by two pressing operations. These may be performed by successive strokes of the same press, the stock being advanced between tools in the press from a first station where the depression 20 and the recess 21 are formed to a second station in which the cup is formed. The recess 21 is formed without cutting away material from the stock.

The cup may be secured to the stem 11 by welding. There is at the outside of the bottom wall 15 of the cup an annular rib corresponding to the depression 20 and the cup may be welded at this rib to the stem.

After the cups 12 and 13 have been welded to the stem 11, the moulded ring 17 is fitted into the cup 12. Generally, only one of the cups will be fitted with a ring but a further ring identical with the ring 17 may be fitted to the cup 13, if required.

On the second end portion 19 of the ring, there is provided an outwardly projecting rib 22 which, in the assembled piston, seats in the recess 21. During assembly of the ring with the cup 12, the ring is deformed from a circular shape to an approximately elliptical shape after the second end portion 19 at one side of the ring has been inserted into the cup. This facilitates movement of the rib 22 at the opposite side of the ring over the internal surface of the side wall 14 to the recess 21. Such deformation of the ring causes the first end portion 18 to project further beyond the side wall 14 in radially outward directions at two positions. This is possible, because the first end portion 18 is not confined.

After the ring 17 has been fitted to the cup 12, the piston is introduced into a cylinder represented at 23 in Figure 2. The cup 12 is received within the cylinder with a slight clearance. The exact amount of clearance depends upon the exact dimensions of the components of the door closer, these being within prescribed tolerance limits. The internal diameter of the cylinder is slightly less than the outside diameter of the first end portion 18 of the ring, when the ring is in an unstressed condition. Accordingly, the ring bears on the cylinder in a manner to seal the piston with respect to the cylinder. Furthermore, the cylinder constrains the first end portion 18 of the ring to a circular shape. Because the first end portion cannot deform to an elliptical shape, the rib 22 cannot escape from the recess 21 and the ring is retained in assembled relation with the cup 12.

In the unstressed condition of the ring 17, the diameter of the projecting rib 22 is slightly greater than the diameter of the internal surface of the side wall 14 of the cup. The diameter of the rib 22 in the unstressed ring may be substantially equal to or may be somewhat greater than the diameter of the recess 21 of the completed cup. As shown in Figure 2, the axial dimension of the rib 22 is substantially equal to the corresponding dimension of the recess 21. Accordingly, in the assembled piston, the recess 21 is completely occupied by the rib 22. It will be noted that each of the cups 12 and 13 is circular, as viewed along the axis of the piston; whereas the stem 11 is relatively narrow and has a rectangular transverse cross section in a plane perpendicular to the axis of the piston.

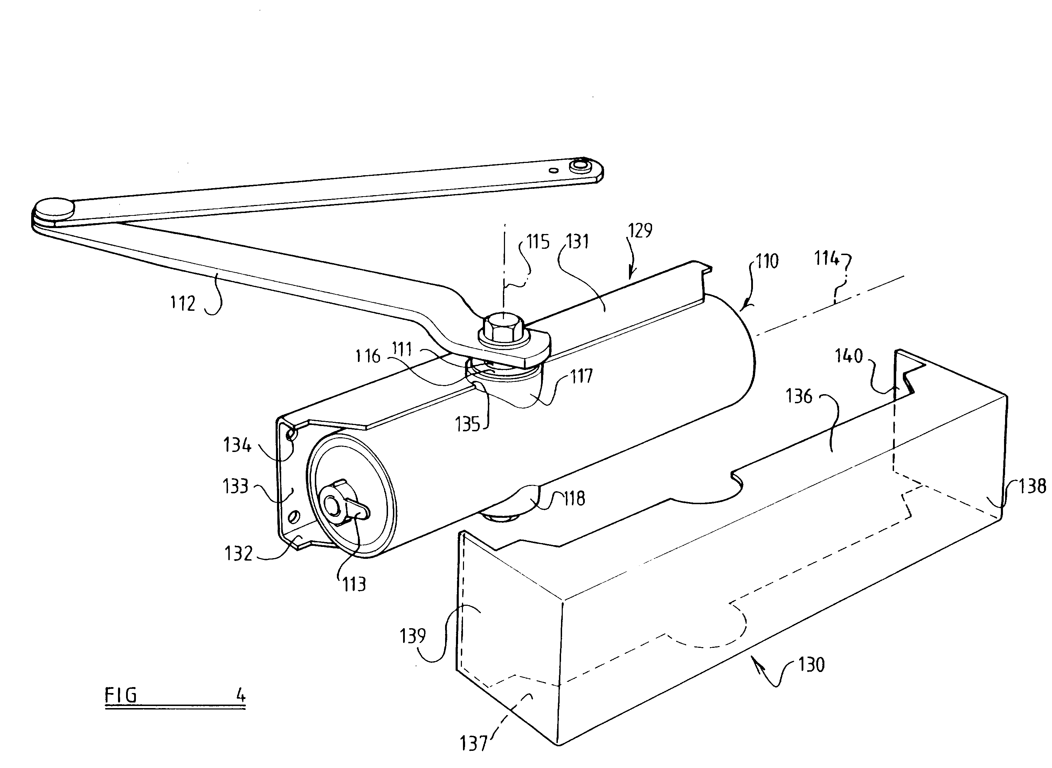

The door closer illustrated in Figure 4 comprises a hollow body 110 from which there protrudes a shaft 111. On one end portion of the shaft, there is mounted an arm 112 which constitutes one member of a linkage by means of which a door closer is connected, in use, with a door or with another structure, for example a frame defining the opening which is normally closed by the door. The body 110 contains a piston, a damping fluid, a spring and a driving mechanism (none of these being shown) for transmitting motion between the piston and the shaft 111. The piston, spring and the driving mechanism may be as provided in known door closers, for example the door closer disclosed in GB 2230050. The shaft 111 and arm 112 also may he arranged as in known door closers.

The body 110 is of generally cylindrical form and has a substantially uniform wall thickness. At its ends, the body 110 is closed by closure plates and one of these may incorporate known, settable adjustment means for adjusting the resistance to flow of damping fluid through the piston in a known manner. An adjustment arm 113 of such adjustment means, which arm is turnable about an axis 114 of the body 110 is shown in Figure 4. Suitable adjustment means are disclosed in GB 2116251A and GB 2158148A.

The shaft 111 is arranged for rotation relative to the body 110 about a shaft axis 115 which is transverse to the axis 114 and intersects that axis at a right angle. The shaft is supported in the body by a pair of bearing bushes, one of which is shown at 116. The bush 116 lies in a hollow boss 117 which projects outwardly from the cylindrical part of the body 110 at one side of the body. The other bearing bush lies in a corresponding, outwardly projecting boss 118 at the opposite side of the body. The bearing bushes are identical with each other and are a force-fit in the bosses. The bearing bushes preferably comprise known seals for preventing escape of the damping fluid from the interior of the body at the interface between the shaft and the bearing.

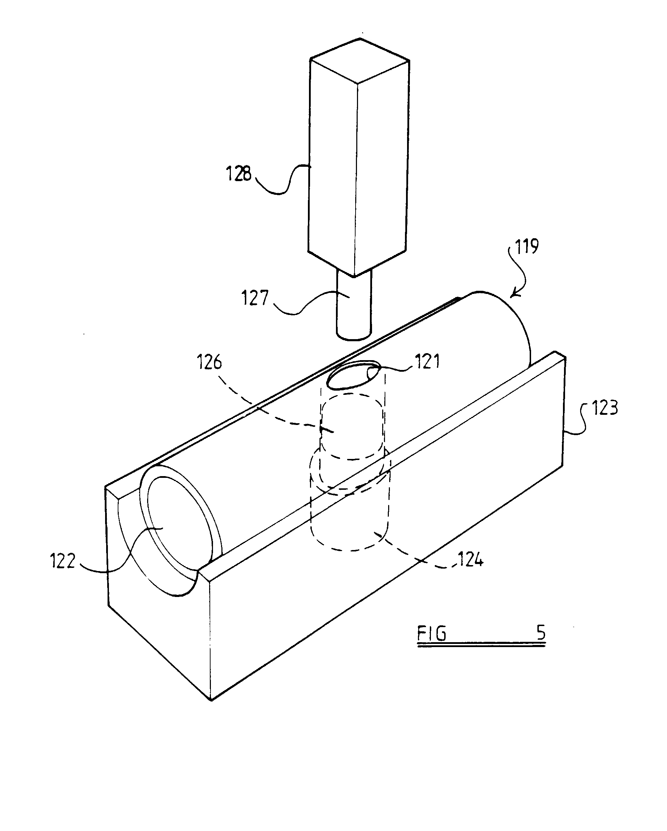

The body 110 is formed from a cylindrical length of tubing and a pair of end caps. A pair of diametrically opposite holes (one of which is shown at 121) is pierced in the length of tubing by shearing the metal and removing the scrap thus cut from the tubing. Each of the holes thus produced is of elliptical shape and the holes are of the same size. The dimensions of these holes are selected according to the internal diameter of the tubing, the wall thickness of the tubing and the outside diameter of the bearing bushes. The major diameter of each hole is somewhat less than the outside diameter of the bearing bushes. The partly formed body is represented at 119 in Figure 5.

The partly formed body 119 is supported on a mandrel 122 which is a sliding fit inside the tubing of which the body is formed. The tubing is supported externally, at least in the vicinity of the hole opposite to the hole 121 by a cradle 123 in which there is formed a circular aperture 124. The tube 119 is so positioned that respective centres of the hole 121 and of the aperture 124 both lie on a common axis. The mandrel 122 contains a drift 126 which is aligned with this axis and which can be reciprocated through a limited stroke along this axis relative to the mandrel. As viewed along the axis, the drift is circular and has a diameter corresponding to, preferably slightly smaller than, the outside diameter of the bearing bush 116. The length of the drift is such that the drift can lie entirely within the circumference of the mandrel 122. The drift may alternatively be spherical.

There is provided a driving member 127 for driving the drift 126 downwardly into the hole in the tube 119 opposite to the hole 121 and sufficiently far into the aperture 124 to form one of the bosses 117 and 118. The drift may be driven completely into the aperture 124 and subsequently retrieved. The driving means 124 may be a tool mounted in a press or other machine having means represented diagrammatically at 128 for advancing the tool 127 towards the longitudinal axis of the tube 119 and then retracting the tool 127 to the position shown in Figure 2.

After one boss has been formed, the tube 119 is inverted so that the portion of the tube immediately surrounding the hole 121 rests on the complementary surface of the cradle 123. The drift 126 is again positioned inside the mandrel 122 disposed inside the tube 119 and the tool 127 is advanced to drive the drift into the hole 121. The bosses 117 and 118 are formed from the side wall of the tube by bending and stretching the material of the tube in the vicinity of the hole 121 and the opposite hole. The bosses are thus integral parts of the body 110.

The door closer further comprises a housing for the body 110. The housing includes a base 129 and a cover 130.

The base 129 has the form of an openended channel with substantially flat, mutually parallel side walls 131 and 132 and a bottom wall 133 extending between the side walls. The bottom wall presents at the outside of the housing a substantially flat surface for bearing on a face of a door or other structure on which the door closer is to be mounted. Adjacent to the ends of the bottom wall 133, there are provided holes 134 through which screws or other fasteners can be applied to attach the base to a door or to other structure with which it is to be used. The side wall 131 has a uniform height over a major part of its length. Opposite end portions of the side wall 131 have a smaller height. One of these end portions is aligned with the adjustment arm 113 and facilitates access to that arm and also to the screw holes 134.

There is formed in the side wall 131 of the base an arcuate seat 135 for the boss 117. The radius of curvature of the seat is substantially equal to the outside radius of the boss 117. The seat subtends at the axis of curvature an angle which is somewhat less than 180° but is at least 150°. The seat extends sufficiently far around the shaft axis 115 to locate the boss 117 securely against movement along the housing.

The side wall 132 has a size and shape corresponding to those of the side wall 131 and provides a seat for the boss 118. Collectively, the seats provided by the side walls of the housing restrain turning of the body 110 about its axis 114 relative to the base 129 of the housing. Furthermore, when the bosses 117 and 118 are engaged with their respective seats, the angular position of the body 110 relative to the base 129 about the axis 114 is a predetermined position and the position of the body along the axis 114 relative to the base also is a predetermined position. Thus, the position of the body relative to the base 129 is predetermined and the predetermined position is achieved accurately when the bosses are merely placed on their respective seats.

The body 110 is permanently attached to the base 129, for example by means of an adhesive or by means of spot welding.

The cover 130 also is channel-shaped, including opposite side walls 136 and 137 which are flat and are mutually parallel and a top wall 138 which extends between the side walls. The cover further comprise end walls 139 and 140 which close the ends of the housing.

The side wall 136 of the cover has an arcuate recess so that the cover can fit over the boss 117. Opposite end portions of the side wall 136 are shaped to complement the end portions of the side wall 131 so that the side wall of the cover can abut the side wall of the base along substantially the entire length of the housing.

The side wall 137 has a size and shape corresponding to those of the side wall 136. These side walls are somewhat deeper than are the side walls 131 and 132. When the cover is applied to the body 110, the side walls 136 and 137 grip the cylindrical surface of the body 110 and pass somewhat beyond the axis 114 of the body. It will be noted that the cover 130 conceals from view the adjustment arm 113 and the fixing screws. Access can be gained to the adjustment arm by pulling the cover from the body 110.

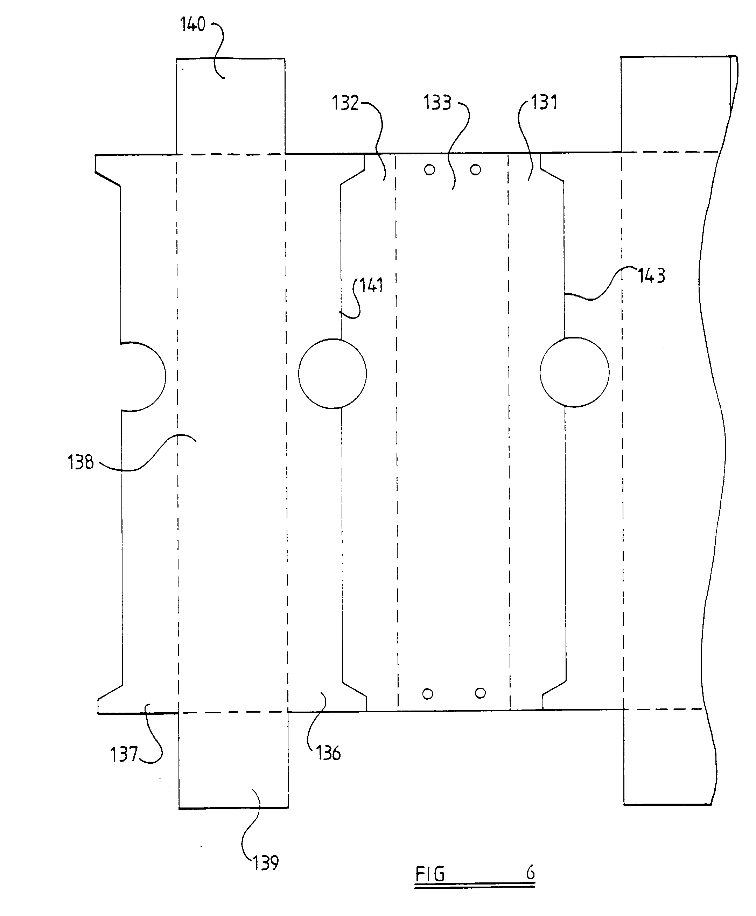

The base 129 and the cover 130 are formed as pressings from substantially flat metal strip which is illustrated in Figure 6. A press tool shears the metal stock along non-rectilinear lines 141 and 142 to form concurrently an edge of one side wall of a cover and both edges of a base. The press tool also bends the side walls and end walls of the cover relative to the top wall of the cover and bends the side walls of the base relative to the bottom wall 133. Furthermore the press tool also pierces the screw holes 134. Each cover and each base of the housing may be formed completely in the same press by a common set of press tools. No additional machining or forming of these components of the housing is necessary.

The shaft 111, the shaft bearings and the components of the door closer which are disposed inside the body 110 are assembled with the body whilst the body is separate from the housing. Typically, one end plate of the body is fitted before the other plate is fitted to close the housing. The housing is charged with the damping fluid, usually a mineral oil. The assembly comprising the closed body is then fitted to the base 129 and attached thereto. Subsequently, the cover 130 is applied to the body to close the housing. The arm 112 may be attached to the shaft 111 after other components of the door closer have been assembled together or at an earlier stage.

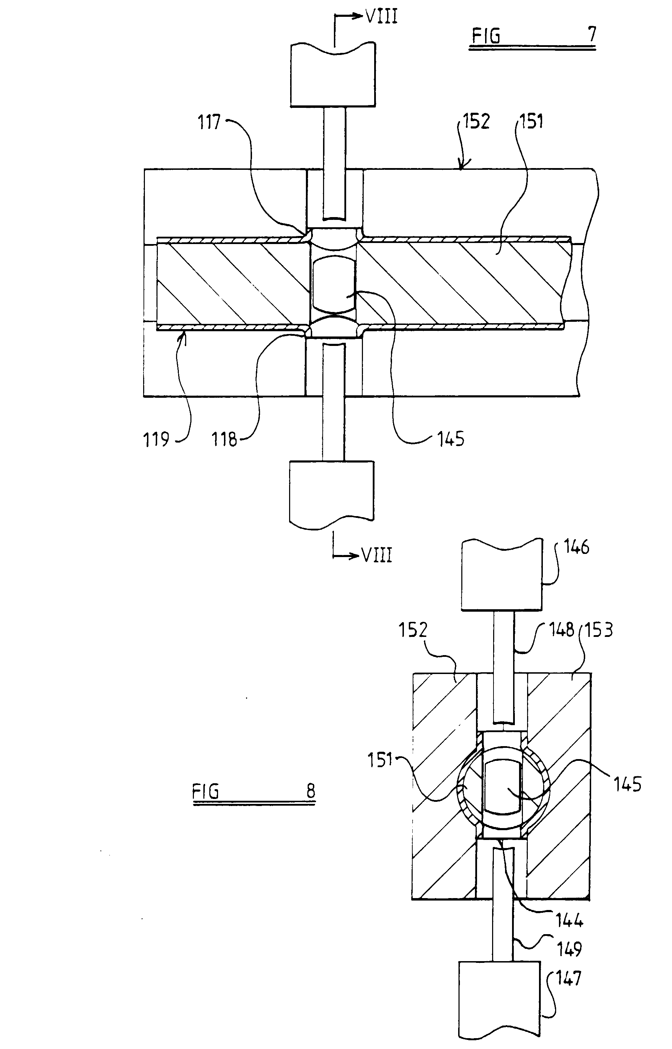

In Figures 7 and 8, there is illustrated an alternative way of forming the bosses on the tube 119. The tube 119, in which the elliptical holes have been pierced, is mounted in a set of tools comprising a mandrel 151, 152 and 153 and a pair of outer tools 152 and 153 which collectively embrace the tube 119 and support the external surface thereof, particularly in the vicinity of the elliptical holes. The outer tools 152 and 153 meet at a flat interface 144 lying in a plane which contains a longitudinal axis of the tube 119. This plane passes through both of the elliptical holes.The outer tools 152 and 153 collectively define two circular openings, in respective ones of which there are formed the bosses 117 and 118.

The mandrel 151 contains a drift 145 which can reciprocate along a transverse passage in the mandrel. Outside the tools 152 and 153, there are provided upper and lower driving means 146 and 147 for advancing respective plungers 148 and 149 alternately towards the axis of the tube 119 to drive the drift into one of the elliptical holes and then into the other elliptical hole. The drift is then positioned centrally in the mandrel 141, for example by means of the plungers 148 and 149. The plungers 148 and 149 are then withdrawn from the bosses formed in the tube 119 and the tools 152 and 153 are moved apart from each other to release the tube 119. The tube is then withdrawn from the mandrel 151 along its axis.

The tool parts 152 and 153 may be connected for pivoting relative to each other or may be mounted on respective slides for reciprocation towards and away from each other.

## Claims

1. A method of making a piston wherein a pressing operation is performed on substantially flat metal stock to form a recess (21) in the stock at one face thereof, a cup (12) is formed by drawing or pressing a portion of the stock including the recess (21), the recess being incorporated in a side wall (14) of the cup (12) at the inside of the cup (12), there is formed a ring (17), to seal the piston with respect to a cylinder, the ring being resiliently deformable, relative to the cup (12) and having, when unstressed, a first end portion (18) with an outside diameter exceeding the outside diameter of the cup (12) and a second end portion (19) having an outward projection (22) and wherein the second end portion (19) is inserted into the cup (12) to seat the projection (22) in the recess (21) of the cup (12) and to leave the first end portion (18) protruding from the cup (12).

2. A method according to Claim 1 wherein the ring (17) is subjected to stress during insertion of the second end portion (19) into the cup (12) and the stress is at least partly relieved when the projection (22) enters the recess.

3. A piston comprising a metal cup (12) and a ring (17) to seal the piston with respect to a cylinder, wherein the ring is resiliently deformable relative to the cup (12) wherein a first portion (18) of the ring protrudes from the cup (12), a second portion (19) of the ring (17) lies inside the cup (12), a projection (22) on the second portion (19) lies in a recess (21) in a side wall (14) of the cup (12) to retain the second portion (19) in the cup (12) and wherein the cup is formed by a pressing or drawing operation from a flat blank and the recess (21) is pressed into the blank before the blank is formed into the cup (12).

4. A piston and cylinder unit wherein the piston is a piston as defined in Claim 3 and characterised in that the cylinder confines the ring (17) to prevent such deformation of the ring (17) as would permit the projection (22) to leave the recess (21).

5. A method of making a door closer comprising a piston and cylinder, characterised in that the piston is made in accordance with Claim 1 or Claim 2.

6. A method according to Claim 5, characterised in that the method further comprises the steps of mounting a shaft (111) in a tube (10) with an axis (115) of the shaft (111) transverse to an axis (114) of the tube (110), and piercing respective holes (121) at diametrically opposite portions in the tube (110), forcing material of the tube surrounding each hole (121) away from the axis of the tube to form a respective outwardly projecting boss (117) and mounting the shaft (111) in the bosses (117).

7. A method according to Claim 6 characterised in that each of said holes (121) is substantially elliptical.

8. A door closer comprising a piston and cylinder, characterised in that the piston is in accordance with Claim 3 or Claim 4.

9. A door closer according to Claim 8 characterised in that the piston is arranged inside a tubular body (110) for reciprocation relative to the body along a path defined by the body, a shaft (111) is arranged for turning relative to the body (110) about an axis (115) transverse to said path and comprising drive means for transmitting movement between the piston and the shaft (111), wherein the tubular body (110) has at diametrically opposite portions a pair of integral, outwardly projecting bosses (117) and wherein the bosses (117) are coaxial with and support the shaft (111).

10. A door closer according to Claim 9 characterised in that each boss (117) is formed by piercing a respective hole (121) in the body (110) and bending the material of the body (110) in a region surrounding the hole (121).

11. A method of making a door closer according to Claim 9 or Claim 10 characterised in that the shaft (111) of the door closer is mounted in the body of the door closer by a method as defined in Claim 6 and wherein the piston is made by a method as defined in Claim 1 or Claim 2.

## Patentansprüche

1. Verfahren zum Herstellen eines Kolbens, wobei ein Preßvorgang auf ein im wesentlichen flaches, metallisches Material angewendet wird, um einen Absatz (21) in dem Material auf einer Seite davon auszubilden, wobei eine Vertiefung (12) durch Ziehen oder Pressen eines Abschnitts des Materials, der den Absatz (21) beinhaltet, gebildet wird, wobei der Absatz in eine Seitenwand (14) der Vertiefung (12) an der Innenseite der Vertiefung (12) eingegliedert ist, wobei ein Ring (17) zur Abdichtung des Kolbens in Bezug auf einen Zylinder ausgebildet wird, wobei der Ring relativ zu der Vertiefung (12) nachgiebig verformbar ist und im unbelasteten Zustand einen ersten Endabschnitt (18) aufweist mit einem Außendurchmesser, der den Außendurchmesser der Vertiefung (12) überschreitet, und einen zweiten Endabschnitt (19), der einen Vorsprung (22) nach außen aufweist, und wobei der zweite Endabschnitt (19) in die Vertiefung (12) eingefügt wird, um den Vorsprung (22) in den Absatz (21) der Vertiefung (12) einzusetzen und den ersten Endabschnitt (18) aus der Vertiefung (12) vorstehen zu lassen.

2. Verfahren nach Anspruch 1, dadurch gekennzeichnet, daß der Ring (17) beim Einfügen des zweiten Endabschnitts (19) in die Vertiefung (12) einer Belastung unterworfen wird und die Belastung zumindest teilweise entlastet wird, wenn der Vorsprung (22) in den Absatz eintritt.

3. Kolben mit einer metallischen Vertiefung (12) und einem Ring (17) zum Abdichten des Kolbens in Bezug auf einen Zylinder, wobei der Ring relativ zu der Vertiefung (12) nachgiebig verformbar ist, ein erster Abschnitt (18) des Rings aus der Vertiefung (12) vorsteht, ein zweiter Abschnitt (19) des Rings (17) innerhalb der Vertiefung (12) liegt, und ein Vorsprung (22) auf dem zweiten Abschnitt (19) in einem Absatz (21) in einer Seitenwand (14) der Vertiefung (12) liegt, um den zweiten Abschnitt (19) in der Vertiefung (12) festzuhalten, und wobei die Vertiefung durch einen Zieh- oder Preßvorgang aus einem ebenen Rohteil hergestellt und der Absatz (21) in das Rohteil eingepreßt wird, bevor das Rohteil zu der Vertiefung (12) umgeformt wird.

4. Kolben- und Zylindereinheit, in der der Kolben ein Kolben nach Anspruch 3 ist, dadurch gekennzeichnet, daß der Zylinder den Ring (17) umschließt, um zu verhindern, daß eine verformung des Rings (17) auftritt, die ermöglichen würde, daß der Vorsprung (22) aus dem Absatz (21) austritt.

5. Verfahren zum Herstellen eines Türschließers mit einem Kolben und einem Zylinder, dadurch gekennzeichnet, daß der Kolben nach Anspruch 1 oder 2 hergestellt wird.

6. Verfahren nach Anspruch 5, dadurch gekennzeichnet, daß das Verfahren weiter die Schritte aufweist, eine Welle (111) in einem Rohr (10) mit einer Achse (115) der Welle (111) quer zu einer Achse (114) des Rohrs (110) anzubringen, entsprechende Öffnungen (121) an diametral gegenüberliegenden Abschnitten in das Rohr (110) einzubringen, das eine jede Öffnung (121) umgebende Material des Rohrs von der Achse des Rohrs wegzudrücken, um jeweils einen nach außen vorstehenden Ansatz (117) auszubilden, und die Welle (111) in den Ansätzen (117) zu lagern.

7. Verfahren nach Anspruch 6, dadurch gekennzeichnet, daß jede der genannten Öffnungen (121) im wesentlichen elliptisch ist.

8. Türschließer mit einem Kolben und einem Zylinder, dadurch gekennzeichnet, daß der Kolben Anspruch 3 oder Anspruch 4 entspricht.

9. Türschließer nach Anspruch 8, dadurch gekennzeichnet, daß der Kolben innerhalb eines rohrförmigen Grundkörpers (110) zur Hin- und Herbewegung relativ zu dem Grundkörper entlang eines durch den Grundkörper festgelegten Wegs angeordnet ist, wobei eine Welle (111) zur Schwenkbewegung relativ zu dem Grundkörper (110) um eine Achse (115) quer zu dem genannten Weg sowie Antriebsmittel zum Übertragen einer Bewegung zwischen dem Kolben und der Welle (111) angeordnet sind, und wobei der Grundkörper (110) an diametral gegenüberliegenden Stellen mit einem Paar einteiliger, nach außen vorstehender Ansätze (117) versehen ist, die koaxial zu der Welle (111) sind und diese tragen.

10. Türschließer nach Anspruch 9, dadurch gekennzeichnet, daß jeder Ansatz (117) durch Einbringen einer entsprechenden Öffnung (121) in den Grundkörper (110) und durch Umbiegen des Materials des Grundkörpers (110) in einem die Öffnung (121) umgebenden Bereich ausgebildet ist.

11. Verfahren zum Herstellen eines Türschließers nach Anspruch 9 oder 10, dadurch gekennzeichnet, daß die Welle (111) des Türschließers in dem Grundkörper des Türschließers durch ein Verfahren nach Anspruch 6 gelagert wird, wobei der Kolben durch ein Verfahren nach Anspruch 1 oder 2 hergestellt wird.

## Revendications

1. Un procédé de fabrication d'un piston dans lequel une opération d'emboutissage est exécutée sur un matériau métallique sensiblement plat pour former un évidement (21) dans le matériau sur une face de celui-ci, une coupelle (12) est formée en étirant ou en emboutissant une partie du matériau comportant l'évidement (21), l'évidement étant incorporé dans une paroi latérale (14) de la coupelle (12) à l'intérieur de la coupelle (12), un anneau (17) est formé pour rendre étanche le piston par rapport à un cylindre, l'anneau étant élastiquement déformable, par rapport à la coupelle (12) et ayant, lorqu'il est sans contrainte, une première partie d'extrémité (18) ayant un diamètre extérieur excédant le diamètre extérieur de la coupelle (12) et une deuxième partie d'extrémité (19) comportant une saillie extérieure (22) et dans lequel la deuxième partie d'extrémité (19) est introduite dans la coupelle (12) pour servir de siège à la saillie (22) dans l'évidement (21) de la coupelle (12) et pour laisser la première partie d'extrémité (18) être en saillie depuis la coupelle (12).

2. Un procédé selon la Revendication 1, dans lequel l'anneau (17) est soumis à une contrainte durant l'introduction de la deuxième partie d'extrémité (19) dans la coupelle (12) et la contrainte est au moins partiellement atténuée lorsque la saillie (22) entre dans l'évidement.

3. Un piston comprenant une coupelle métallique (12) et un anneau (17) pour rendre étanche le piston par rapport à un cylindre, dans lequel l'anneau est élastiquement déformable par rapport à la coupelle (12), dans lequel une première partie (18) de l'anneau est en saillie depuis la coupelle (12), une deuxième partie (19) de l'anneau (17) se trouve à l'intérieur de la coupelle (12), une saillie (22) sur la deuxième partie (19) se trouve dans un évidement (21) d'une paroi latérale (14) de la coupelle (12) pour retenir la deuxième partie (19) dans la coupelle (12) et dans lequel la coupelle est formée par une opération d'emboutissage ou d'étirage à partir d'un flan plat et l'évidement (21) est embouti dans le flan avant que le flan soit formé en la coupelle (12).

4. Une unité à piston et cylindre dans laquelle le piston est un piston tel que défini dans la Revendication 3 et caractérisée en ce que le cylindre enferme l'anneau (17) pour empêcher une déformation de l'anneau (17) telle qu'elle permettrait à la saillie (22) de quitter l'évidement (21).

5. Un procédé de fabrication d'un ferme-porte comprenant un piston et un cylindre, caractérisé en ce que le piston est fabriqué selon la Revendication 1 ou la Revendication 2.

6. Un procédé selon la Revendication 5, caractérisé en ce que le procédé comprend en outre les étapes de montage d'un arbre (111) dans un tube (10), avec un axe (115) de l'arbre (111) transversal à un axe (114) du tube (110), et de perçage des trous respectifs (121) à des positions diamètralement opposées du tube (110), de forçage de la matière du tube entourant chaque trou (121) pour l'éloigner de l'axe du tube pour former un bossage respectif en saillie vers l'extérieur (117) et de montage de l'arbre (111) dans les bossages (117).

7. Un procédé selon la Revendication 6, caractérisé en ce que chacun desdits trous (121) est sensiblement elliptique.

8. Un ferme-porte comprenant un piston et un cylindre, caractérisé en ce que le piston est conforme à la Revendication 3 ou à la Revendication 4.

9. Un ferme-porte selon la revendication 8, caractérisé en ce que le piston est disposé à l'intérieur d'un corps tubulaire (110) pour un déplacement en va-et-vient par rapport au corps le long d'un chemin défini par le corps, en ce qu'un arbre (111) est disposé pour tourner par rapport au corps (110) autour d'un axe (115) tranversal audit chemin et comprenant un moyen d'entraînement pour transmettre un mouvement entre le piston et l'arbre (111), dans lequel le corps tubulaire (110) possède à des positions diamétralement opposées une paire de bossages intégrés en saillie vers l'extérieur (117) et dans lequel les bossages (117) sont coaxiaux à l'arbre (111) et supportent l'arbre (111).

10. Un ferme-porte selon la Revendication 9, caractérisé en ce que chaque bossage (117) est formé en perçant un trou respectif (121) dans le corps (110) et en incurvant le matériau du corps (110) dans une zone entourant le trou (121).

11. Un procédé de fabrication d'un dispositif de porte selon la Revendication 9 ou la Revendication 10, caractérisé en ce que l'arbre (111) du ferme-porte est monté dans le corps du ferme-porte selon un procédé tel que défini dans la Revendication 6, et dans lequel le piston est fabriqué selon un procédé tel que défini dans la Revendication 1 ou la Revendication 2.
